# EUROPEAN PATENT SPECIFICATION

(11) **EP 4 101 677 B1**
(45) Date of publication and mention of the grant of the patent: **18.12.2024**
(21) Application number: 22176965.6
(22) Date of filing: 02.06.2022
(51) Int. Cl.: B60K 35/10, B60K 35/22, B60K 35/28, B60H 1/34, B60H 1/00, G06F 3/04845

(54) **SYSTEM, METHOD AND COMPUTER PROGRAM FOR CONTROLLING AN AIR OUTLET DEVICE**
SYSTEM, VERFAHREN UND COMPUTERPROGRAMM ZUR STEUERUNG EINER LUFTAUSLASSVORRICHTUNG
SYSTÈME, PROCÉDÉ ET PROGRAMME INFORMATIQUE POUR COMMANDER UN DISPOSITIF DE SORTIE D'AIR

(30) Priority: 08.06.2021 ES 202130524
(43) Date of publication of application: 14.12.2022
(73) Proprietor: Seat, S.A., 08760 Martorell (ES)
(72) Inventor: COROMINAS MARCÉ, Joel, 08760 Martorell (ES); SEGURA MARTÍ, Marc, 08760 Martorell (ES)
(74) Representative: Pons

(56) References cited:
- WO-A2-2020/102255
- DE-A1- 102012 016 109
- US-A1- 2018 037 087
- US-A1- 2018 086 179

## Description

### Technical field

The present invention relates to a system for controlling an air outlet device, such as an air vent, configured to independently control at least the direction of an outgoing air flow from several air outlet devices through a graphical user interface.

In a second aspect, the present invention relates to a method for controlling an air outlet device, adapted to operate the system of the first aspect.

A third aspect of the present invention relates to a computer program, adapted to implement the steps of the method of the second aspect.

### State of the prior art

Systems for controlling an air outlet device comprising the features of the preamble of claim 1 of the present invention are known.

This is the case of the system proposed in patent US10029537B2. However, in the system described in said patent it is not possible to individually control the outgoing air flows from each air outlet device, but only control the total air flow that circulates inside a motor vehicle cabin.

Likewise, in said system only a schematic, two-dimensional, overhead representation of the vehicle cabin is offered, including the position of the air outlet devices, the windows and the seats thereof. Thus, the user can perform a contact and drag movement on the schematic representation, and based on the starting point and the ending point of said drag, as well as on other variables in general, such as the speed of the vehicle and the opening position of the windows, the total air flow circulating inside the vehicle cabin is controlled, in this case only in a horizontal direction.

Therefore, in said system, the user does not directly control the outgoing air flow, or even the total flow, since the resulting flow generally depends on said different variables, meaning that it may result in direct air directions on the user, which can be very annoying, or affect other users of the vehicle (for example, the occupants of the rear seats), in a negative and unexpected way for the user who tries to control such air flow, since he or she will not know what the resulting air flow will finally be like.

Documents DE102012016109A1 and US2018/037087A1 disclose systems including the features of the preamble of claim 1.

Documents WO2020/102255A2 and US2018/086179A1 disclose systems for controlling air outlets of a vehicle, which do not allow an individual and direct control of the individual air outlets.

It is therefore necessary to offer an alternative to the state of the art that covers the deficiencies found therein, by providing a system for controlling an air outlet device that does not suffer from the known drawbacks, and that therefore allows each of several outgoing air flows from respective air outlet devices to be individually controlled, with the great advantages that such a system can offer.

### Description of the invention

To this end, the present invention relates to a system for controlling an air outlet device, comprising:
- a control unit configured to provide control signals to at least one actuator of at least one air outlet device, to control the direction of an outgoing air flow therefrom; and
- a graphical user interface (commonly known as GUI), which comprises at least one touch screen operatively connected to said control unit, and which is configured to:
   - display on a display area of the touch screen at least one representation associated with said at least one air outlet device; and
   - detect a contact, maintained along a drag movement, made by a user on said representation, in a touch input region of the at least one touch screen;
wherein the control unit is configured to generate said control signals in response to the detection of said contact maintained along a drag movement.

Unlike the systems of the state of the art, in the system proposed by the present invention:
- the graphical user interface is configured to:
   - display on said display area of the touch screen at least two representations associated respectively with the independent control of at least two air outlet devices, such as air vents; and
   - independently detect each of at least two contacts maintained along respective drag movements, each including at least one contact on an area of a respective one of said at least two representations or on a visual element represented on or adjacent to the same, each visual element being associated with a respective representation of said at least two representations;
   and
- the control unit is configured to generate said control signals to independently control the direction of each of said at least two outgoing air flows, in response to the detection of each of said at least two contacts maintained along respective drag movements.

The independent control of the direction (and also of the flow rate for some embodiments, which will be described later) of the outgoing air flows offers numerous advantages, such as allowing the user to be assisted and guided in performing the task of directing each air vent in the desired direction, or also allowing the status or positioning of the vents and/or representations of the direction of the outgoing air flows to be displayed (for the exemplary embodiment described in the following paragraph). The latter is especially relevant for air vents that do not show the mobile slats that direct the air, since the user cannot know where the air is directed when looking at the air vents, but they can know this when looking at the screen, where this information is displayed.

According to the invention
- the graphical user interface is configured to:
   - display on said display area of the touch screen said at least two representations, which correspond to at least two outgoing air flows from said at least two air outlet devices;
   - independently detect each of at least two contacts maintained along respective drag movements, each including at least one contact on an area of a respective one of said at least two representations of the at least two outgoing air flows or on said visual element represented on or adjacent to the same; and
   - independently modify each of said at least two representations of the outgoing air flow, in response to the detection of the corresponding contact maintained along a drag movement;
   and
- the control unit is configured to generate said control signals to independently control the direction of each of said at least two outgoing air flows in at least two different directions, on mutually transverse planes, in response to the detection of each of said at least two contacts maintained along respective drag movements.

According to the invention
- the graphical user interface is configured to:
- define display sub-areas within said display area, each of said display sub-areas being dimensionally limited based on the maximum air direction ranges of the corresponding air outlet device, and to display within each of said display sub-areas a respective one of the at least two representations and visual element represented on or adjacent to the same; and
- independently perform said modification of each of said at least two representations of the outgoing air flow, displaying it, together with the visual element represented on or adjacent to the same, only within the respective display sub-area thereof.

By means of this exemplary embodiment, and in particular by means of the aforementioned at least two representations of the outgoing air flow, the direction of the outgoing air flows is individually displayed at all times, both the initial and the modified direction, and practically in real-time while it is being modified by the user.

In this case, in general, the control unit is configured to provide a portion of said control signals to an actuator in charge of controlling the direction of the outgoing air flow in one of said two different directions, for example, in a horizontal direction X, and another portion of the control signals to another actuator that is in charge of controlling the direction of the outgoing air flow in the other of said two different directions, for example, in a vertical direction Y.

For an exemplary embodiment, the graphical user interface is configured to display on said display area of the touch screen a representation of each of the at least two air outlet devices, and to display each of said representations of the outgoing air flow, defining it with visual properties that allow it to be differentiated from the rest of the elements represented in the display area, by means of a respective shape that can be elongated/shortened, which, when it takes an elongated shape, has a first end located on or adjacent to the representation of the corresponding air outlet device and a second end located on said area of the representation of the corresponding outgoing air flow, wherein said elongated shape runs according to the desired direction for the outgoing air flow.

According to an implementation of said exemplary embodiment, the graphical user interface is configured to display, on the display area of the touch screen, each visual element on or adjacent to the second end of the representation of the respective outgoing air flow.

According to an exemplary embodiment, the aforementioned shape that can be elongated/shortened also takes shapes that are not elongated, in this case when the second end and/or respective visual element is on or very close to the representation of the corresponding air outlet device.

For an exemplary embodiment, the control unit is configured to generate the control signals to control the direction of the outgoing air flow based on the location, in the display area of the touch screen, of a portion of the elongated shape that does not include the first end or the respective visual element, with respect to the position of the respective air outlet device.

According to an exemplary embodiment:
- the display area of the touch screen is divided into predefined cells, each one assigned to a respective predetermined direction of the respective outgoing air flow; and
- the control unit is configured to generate the control signals to control the direction of the respective outgoing air flow based on the location, in one of said predefined cells, of a portion of said elongated shape that does not include the said first end or the respective visual element.

According to an exemplary embodiment, the control unit is configured to generate the control signals to control the direction of the outgoing air flow based on the location of the said portion of the elongated shape that does not include the first end or the location of the respective visual element, once the contact maintained along a drag movement has ceased.

According to an exemplary embodiment, the visual element takes the shape of a geometric figure, such as a circle.

According to an exemplary embodiment, each of the representations of the outgoing air flow from the at least two air outlet devices is a perspective or three-dimensional representation.

According to an exemplary embodiment:
- each of the representations of the outgoing air flow, displayed and modified by the graphical user interface, represents information on the direction and intensity or flow rate of the outgoing air flow from the respective air outlet device; and
- the control unit is configured to generate the control signals to also control the intensity or flow rate of the respective outgoing air flow, in response to the detection of each of the at least two contacts maintained along respective drag movements.

This exemplary embodiment offers the advantages of being able to control, by means of a single input, i.e., by means of the drag (contact plus drag movement) described herein, both the flow rate and the direction of each of the outgoing air flows, which provides greater driving safety when the system is applied to the control of motor vehicle air vents, especially when the driver is in charge of controlling the same, since they should hardly take their eyes off the road. Likewise, in this way, the user can know, through a single graphic element, both the direction and flow rate status of the corresponding outgoing air flow.

Alternatively, the flow rate is controlled by the user through interaction with corresponding actuators and intensity indicators of fans associated with the air outlet devices, which are displayed in the display area.

In this case, the control unit is configured to provide a portion of the control signals to an actuator in charge of controlling the intensity or flow rate of the respective outgoing air flow.

For an implementation of said exemplary embodiment, the length of the elongated shape is proportional to the desired intensity or flow rate for the corresponding outgoing air flow, the control unit being configured to generate and provide the control signals to the at least one actuator of the respective air outlet device, to control it so that it increases or decreases the intensity or flow rate of the outgoing air flow based on the length of the elongated shape.

According to a variant of said implementation, the control unit is configured to generate and provide the control signals to the at least one actuator of the respective air outlet device, to control it so that it allows or prevents the outlet of the outgoing air flow based on the length of the elongated shape and/or the position, in the display area, of the aforementioned area of the representation of the respective outgoing air flow or of the visual element represented on or adjacent to the same.

For a way of carrying out said variant, the control unit is configured to generate and provide the control signals to the at least one actuator of the respective air outlet device, to control it so that it completely prevents the outlet of the outgoing air flow when the visual element associated with the same coincides with a central area of the representation of the respective air outlet device, in the display area. Thus, by means of a single input, the advantages described above relating to the control of the flow rate and the direction of each of the outgoing air flows are obtained, in addition to that of controlling the opening/closing of the air outlet of the air outlet device by means of said single input and the advantage that the user can know, through a single graphic element, both the direction and flow rate status of the corresponding outgoing air flow and the opening/closing status of the air outlet of the corresponding air outlet device.

By means of the system proposed by the first aspect of the invention, the user, by only moving "the actionable element" (either the visual element or the aforementioned area of the representation of the outgoing air flow), i.e., performing a contact and drag movement, and without releasing it from the screen, can change the direction of the outgoing air flow and, optionally, the flow rate thereof in real time or very close to real time, and choose the ones they like.

Preferably, the said portion of the elongated shape that does not include the first end is the said second end or it includes the same, such that, if the representation is mathematically simplified by a vector, its direction results in the air flow direction desired by the user and its module in the intensity or flow rate thereof.

Thus, for an exemplary embodiment, once the contact on the screen has finished and the visual element is positioned, the direction of the existing vector is checked from the centre of the air outlet device to the centre of the actionable element, measuring the X and Y coordinates. These coordinates will be transmitted to the control unit so that, in the event that the air outlet device is an air vent, it moves the motors of the vertical slats and the horizontal slats until the air is directed in that direction. The amount of movement of the motor will be proportional to the increase of the corresponding coordinate on the screen (X or Y).

Alternatively, to simplify the calculations, for an implementation of the exemplary embodiment described above relating to the division of the display area into predefined cells, a structure of cells (not seen by the user) is created, dividing the screen into a multitude of areas. Each area corresponds to a predefined position of the air vents (horizontal and vertical motor position). It is therefore a matter of discretising the screen in order to simplify the calculations.

A second aspect of the present invention relates to a computer-implemented method for controlling an air outlet device, comprising:
- displaying, by a graphical user interface, in a display area of a touch screen comprised by the graphical user interface, at least one representation associated with at least one air outlet device;
- detecting, by the graphical user interface, a contact, maintained along a drag movement, made by a user on the said representation, in a touch input region of the at least one touch screen;
- generating, by a control unit operatively connected to the graphical user interface, control signals in response to the detection of the said contact maintained along a drag movement; and
- providing the aforementioned control signals, by the control unit, to at least one actuator of at least said air outlet device, to control the direction of an outgoing air flow therefrom.

The method proposed by the present invention further comprises:
- using the graphical user interface to:
   - display on the display area of the touch screen at least two representations associated respectively with the independent control of at least two air outlet devices; and
   - independently detect each of at least two contacts maintained along respective drag movements, each including at least one contact on an area of a respective one of the at least two representations or on a visual element represented on or adjacent to the same, each visual element being associated with a respective representation;
   and
- using the control unit to generate the said control signals to independently control the direction of each of the at least two outgoing air flows, in response to the detection of each of the at least two contacts maintained along respective drag movements;
- using the graphical user interface to:
- display on said display area of the touch screen said at least two representations, which correspond to at least two outgoing air flows from said at least two air outlet devices;
- independently detect each of at least two contacts maintained along respective drag movements, each including at least one contact on an area of a respective one of said at least two representations of the at least two outgoing air flows or on said visual element depicted on or adjacent to the same; and
- independently modify each of said at least two representations of the outgoing air flow, in response to the detection of the corresponding contact maintained along a drag movement; and
- using the control unit to generate said control signals to independently control the direction of each of said at least two outgoing air flows in at least two different directions, on mutually transverse planes, in response to the detection of each of said at least two contacts maintained along respective drag movements.

The method further comprises using the graphical user interface to:
- define display sub-areas within said display area, each of said display sub-areas being dimensionally limited based on the maximum air direction ranges of the corresponding air outlet device, and to display within each of said display sub-areas a respective one of the at least two representations and visual element represented on or adjacent to the same; and
- independently perform said modification of each of said at least two representations of the outgoing air flow, displaying it, together with the visual element represented on or adjacent to the same, only within the respective display sub-area thereof.

In a third aspect, the present invention relates to a computer program, which comprises code instructions that when executed in at least one processor implement the steps of the method of the second aspect of the present invention.

### Brief description of the drawings

The foregoing and other advantages and features will be more fully understood from the following detailed description of some exemplary embodiments with reference to the attached drawings, which are to be considered by way of illustration and not limitation, wherein:
Figure 1 is a schematic representation of the system proposed by the first aspect of the present invention.
Figure 2 shows the graphical user interface of the system of the first aspect of the present invention, applied to four outgoing air flows, for a situation where the flow rate thereof is small, such that the representations of the same do not have elongated shapes.
Figure 3 shows the same elements as Figure 2, but for a situation where the flow rate of the four outgoing air flows is much greater, such that the representations of the same have elongated shapes with directions corresponding to the directions to be controlled.
Figure 4 is a view analogous to that of Figure 2, but having indicated therein four sub-areas defined within the display area, which delimit the regions where the respective four representations of outgoing air flows and associated visual elements can be displayed, i.e., where they can be moved virtually.

### Detailed description of exemplary embodiments

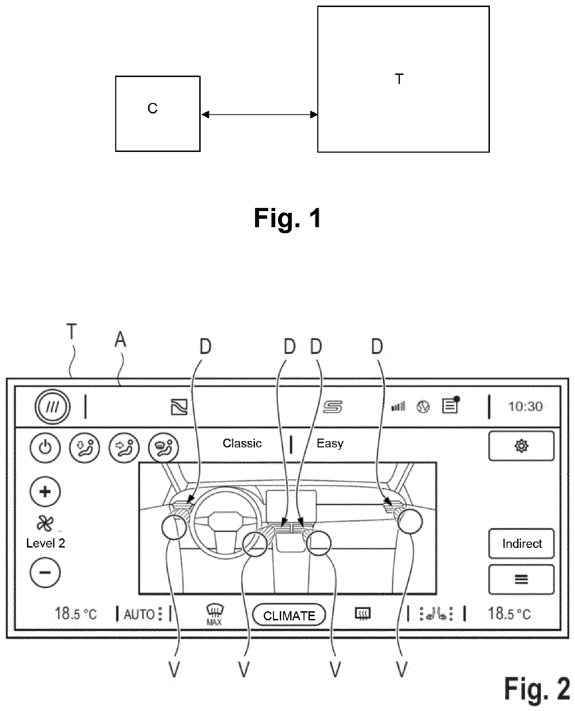

As shown in Figure 1, the present invention relates to a system for controlling an air outlet device, comprising:
- a control unit C configured to provide control signals to at least one actuator of at least one air outlet device, to control the direction of an outgoing air flow therefrom; and
- a graphical user interface comprising at least one touch screen T operatively connected to the control unit C.

For the illustrated exemplary embodiment, the graphical user interface is configured to:
- display on the display area A of the touch screen T representations F, in this case four, corresponding to outgoing air flows from respective air outlet devices, in this case air vents arranged on the dashboard of a motor vehicle cabin;
- independently detect each of four contacts (if the number of air outlet devices were other than four, the number of contacts would also be different) maintained along respective drag movements made by a user on the representations F, in a touch input region of the touch screen T, each including at least one contact on a visual element V, in this case a circle, shown adjacent to and associated with a respective representation F; and
- independently modify each one of the four representations F of the outgoing air flow, in response to the detection of the corresponding contact maintained along a drag movement.

The control unit C is configured to generate said control signals to independently control the direction of each of the four outgoing air flows in two different directions (X and Y), on mutually transverse planes, as well as, optionally, the intensity or flow rate of the same, in response to the detection of each of the four contacts maintained along respective drag movements.

As seen in Figures 2, 3 and 4, the graphical user interface is configured to display on the display area A of the touch screen T a representation D of each of the four air outlet devices, and to display each of the representations F of the four outgoing air flows, defining them with visual properties that allow them to be differentiated from the rest of the elements represented in the display area A, by means of a respective shape that can be elongated/shortened, by means of the drag (contact plus drag movement) performed on the same.

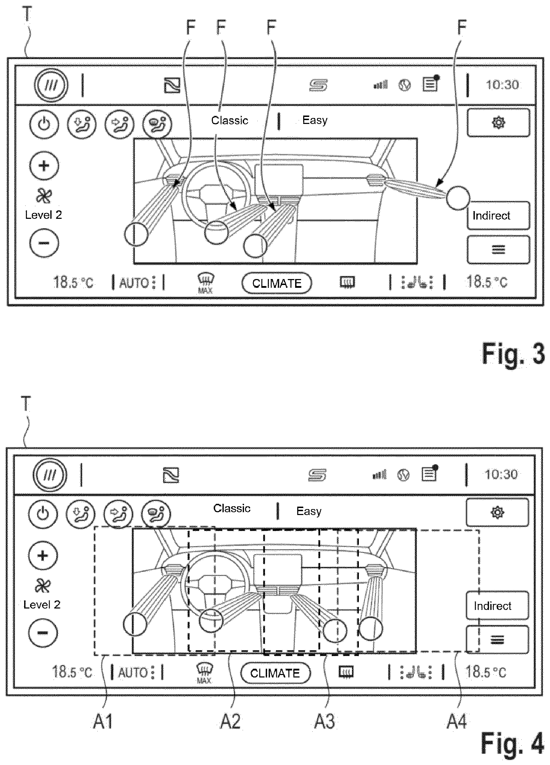

The aforementioned shapes of the representations F that can be elongated/shortened, as shown in Figures 3 and 4, can take respective elongated shapes (in this case, a group of parallel lines), the length of which is proportional to the intensity or flow rate to be obtained, and their directions to the desired directions (horizontal X and vertical Y) to be obtained for the outgoing air flows.

As shown in Figures 3 and 4, each of the elongated shapes has a first end located on or adjacent to the representation D of the corresponding air outlet device and a second end adjacent to a respective circle V.

On the other hand, for the situation illustrated in Figure 2, the shapes of the representations F that can be elongated/shortened take shapes that are not elongated, in this case the second end and respective circle V being very close to the representation of the corresponding air outlet device D.

In fact, when a circle V is arranged (by means of the corresponding drag) on the representation D of the air outlet device with which it is associated, coinciding on a central area of the same (situation not illustrated), the control unit C controls the respective actuator so that it completely prevents the outlet of the outgoing air flow therefrom.

For the illustrated exemplary embodiment, as shown in Figures 2, 3 and 4, each of the representations F of the outgoing air flow from the air outlet devices is a perspective or three-dimensional representation, so that the user can know at any time what the outgoing air flow obtained will be like by interacting with a virtual perspective or three-dimensional representation of the same. Indeed, each representation F of the outgoing air flow independently indicates to the user the status of each of the air outlet devices, showing through a single element associated with each air outlet device the direction of the air flow extracted by each of the vents, as well as, optionally, the flow rate or intensity of said air flow. Additionally, the same representation F can indicate to the user the operating status of said vent, i.e., if it allows or prevents the passage of air flow through the respective air outlet device.

In fact, as shown in Figures 2, 3 and 4, the display area A shows, for the illustrated exemplary embodiment, a layout or arrangement of the front portion of a motor vehicle cabin, including the dashboard, steering wheel, representations of the air vents D, and representations F of the outgoing air flows, seen from the same perspective that the driver would have, so that said driver can correctly interpret the information provided by each representation F. This arrangement or layout shows fixed graphic information (dashboard, steering wheel, representations D, etc.) and mobile graphic information, i.e., changing so that it displays a movement of the same in the display area A, the latter being relative to the representations F and visual elements C.

As shown in Figure 4, for the illustrated exemplary embodiment, the graphical user interface defines display sub-areas A1, A2, A3, A4 (which, in general, are not shown) within the display area A, which delimit the regions where each representation F and associated circle V can be moved virtually (during the corresponding drags), i.e., they establish virtual limits.

Thus, a two-fold objective is achieved. On the one hand, the objective of limiting those positions of the actuator element, i.e., of the circle V, based on the maximum air direction ranges (for example, a displacement of four centimetres in Y on the screen is equivalent to the maximum angle of the vertical adjustment slats of the corresponding air outlet device; the user will not be able to move the circle V above said virtual limit). On the other hand, the objective is achieved where the circles V do not mix with each other when displayed on the screen T, which would make it difficult for the user to handle them.

According to a preferred mode, it is sought that the circles C cannot cross each other, such that the aforementioned virtual limits are arranged which the respective circle C will not be able to cross. Regardless of how much the user drags on the screen, the movement of the circle C and the corresponding actuator of the air outlet device will be limited to its maximum position on the screen.

As shown in Figures 2, 3 and 4, the display area A also illustrates, for the illustrated exemplary embodiment, a plurality of virtual elements, at least some of which allow the user to interact with them to activate and/or monitor a specific function.

Such is the case of the virtual elements that (in an alternative or complementary way to the modification of the air flow rate by means of the drag with the circle V) make it possible to modify the flow rate of the outgoing air flow provided by the fan of a selected air vent, in this case by means of contact with the virtual buttons with "+" and "-" signs, to respectively increase or decrease the flow rate of the fan, which is now indicated as associated with level 2 indicated next to a symbol of a fan. Alternatively, the flow rate is controlled by the user through interaction with corresponding actuators and intensity indicators of fans associated with the air outlet devices, which are displayed in the display area.

In the case of being a complementary embodiment to the one related to the modification of the air flow rate by means of the drag, acting on said virtual buttons "+"/"-" would cause an increase in the length of the respective representation F, synchronising the information represented by each of the indicators, and vice versa.

Another such virtual element illustrated in Figures 2, 3 and 4 is an INDIRECT/DIRECT air flow actuator (in the figures the "indirect" legend is shown because that is the selected mode; clicking on it would change the mode to "direct"), which, combined with seat occupancy information (obtained by means of any known detection system), determines the direction of the air flow towards the user (direct) or without impacting them (indirect).

In general, if the "indirect" mode is activated, it will have priority over the corresponding drag. In other words, even if a drag is performed which directs the representation F of the air flow towards the user, the actual air flow will not be controlled in a way that coincides with that of said representation F, since the user does not want it to impact them. Alternatively, activating the "indirect" mode defines additional virtual limits that prevent even the representation F of the air flow from being directed towards the user.

In addition, for a case in which the user switches from "direct" to "indirect" mode, the control unit C will control the actuators of the air vents so that they will direct the corresponding outgoing air flow so that it does not directly impact the users. This change will be shown in the respective representations F, which will be modified to adapt to the position of the actuators.

A person skilled in the art could make changes and modifications to the exemplary embodiments described without departing from the scope of the invention as defined in the attached claims.

## Claims

1. A system for controlling an air outlet device, comprising:
- a control unit (C) configured to provide control signals to at least one actuator of at least one air outlet device, to control the direction of an outgoing air flow therefrom; and
- a graphical user interface comprising at least one touch screen (T) operatively connected to said control unit (C), and which is configured to:
- display on a display area (A) of the touch screen (T) at least one representation associated with said at least one air outlet device; and
- detect a contact, maintained along a drag movement, made by a user on said representation, in a touch input region of the at least one touch screen (T);
wherein the control unit (C) is configured to generate said control signals in response to the detection of said contact maintained along a drag movement;
- wherein the graphical user interface is configured to:
- display on said display area (A) of the touch screen (T) at least two representations (F) associated respectively with the independent control of at least two air outlet devices; and
- independently detect each of at least two contacts maintained along respective drag movements, each including at least one contact on an area of a respective one of said at least two representations (F) or on a visual element (V) represented on or adjacent to the same, each visual element (V) being associated with a respective representation (F) of said at least two representations (F);
- the control unit (C) is configured to generate said control signals to independently control the direction of each of said at least two outgoing air flows, in response to the detection of each of said at least two contacts maintained along respective drag movements;
- the graphical user interface is configured to:
- display on said display area (A) of the touch screen (T) said at least two representations (F), which correspond to at least two outgoing air flows from said at least two air outlet devices;
- independently detect each of at least two contacts maintained along respective drag movements, each including at least one contact on an area of a respective one of said at least two representations (F) of the at least two outgoing air flows or on said visual element (V) depicted on or adjacent to the same; and
- independently modify each of said at least two representations (F) of the outgoing air flow, in response to the detection of the corresponding contact maintained along a drag movement;
and
- the control unit (C) is configured to generate said control signals to independently control the direction of each of said at least two outgoing air flows in at least two different directions, on mutually transverse planes, in response to the detection of each of said at least two contacts maintained along respective drag movements;
**characterized in that** the graphical user interface is configured to:
- define display sub-areas (A1, A2, A3, A4) within said display area (A), each of said display sub-areas (A1, A2, A3, A4) being dimensionally limited based on the maximum air direction ranges of the corresponding air outlet device, and to display within each of said display sub-areas (A1, A2, A3, A4) a respective one of the at least two representations (F) and visual element (V) represented on or adjacent to the same; and
- independently perform said modification of each of said at least two representations (F) of the outgoing air flow, displaying it, together with the visual element (V) represented on or adjacent to the same, only within the respective display sub-area (A1, A2, A3, A4) thereof.

2. The system according to claim 1, wherein the graphical user interface is configured to display on said display area (A) of the touch screen (T) a representation (D) of each of the at least two air outlet devices, and to display each of said representations (F) of the outgoing air flow, defining it with visual properties that allow it to be differentiated from the rest of the elements represented in the display area (A), by means of a respective shape that can be lengthened/shortened, which, when it adopts an elongated shape, has a first end located in or adjacent to the representation (D) of the corresponding air outlet device and a second end located in said area of the representation (F) of the corresponding outgoing air flow, wherein said elongated shape runs according to the desired direction for the outgoing air flow.

3. The system according to claim 2, wherein the graphical user interface is configured to display, in said display area (A) of the touch screen (T), each visual element (V) on or adjacent to the second end of the representation (F) of the respective outgoing air flow.

4. The system according to claim 2 or 3, wherein the control unit (C) is configured to generate said control signals to control the direction of the outgoing air flow based on the location, in the display area (A) of the touch screen (T), of a portion of said elongated shape which does not include said first end or the respective visual element (V), with respect to the position of the respective air outlet device.

5. The system according to claim 3, wherein:
- said display area of the touch screen (T) is divided into predefined cells, each one assigned to a respective predetermined direction of the respective outgoing air flow; and
- the control unit (C) is configured to generate said control signals to control the direction of the respective outgoing air flow based on the location, in one of said predefined cells, of a portion of said elongated shape that does not include said first end or the respective visual element (V).

6. The system according to claim 4 or 5, wherein the control unit (C) is configured to generate the control signals to control the direction of the outgoing air flow based on the location of said portion of the elongated shape that does not include said first end or the respective visual element (V), once the contact maintained along a drag movement has ceased.

7. The system according to any of the previous claims, wherein:
- each of said representations (F) of the outgoing air flow, displayed and modified by the graphical user interface, represents information on the direction and intensity or flow rate of the outgoing air flow from the respective air outlet device; and
- the control unit (C) is configured to generate said control signals to also control the intensity or flow rate of the respective outgoing air flow, in response to the detection of each of said at least two contacts maintained along respective drag movements.

8. The system according to claim 7 when it depends on claim 2, wherein the length of said elongated shape is proportional to the desired intensity or flow rate for the corresponding outgoing air flow, the control unit (C) being configured to generate and provide said control signals to the at least one actuator of the respective air outlet device, to control it so that it increases or decreases the intensity or flow rate of the outgoing air flow based on said length of the elongated shape.

9. The system according to claim 8, wherein the control unit (C) is configured to generate and provide said control signals to at least one actuator of the respective air outlet device, to control it so that it allows or prevents the outlet of the outgoing air flow based on the length of the elongated shape and/or the position, in the display area (A), of said area of the representation (F) of the respective outgoing air flow or of said visual element (V) represented on or adjacent to the same.

10. The system according to claim 9, wherein the control unit (C) is configured to generate and provide the control signals to the at least one actuator of the respective air outlet device, to control it so that it completely prevents the outlet of the outgoing air flow when said visual element (V) coincides with a central area of the representation (D) of the respective air outlet device, in the display area (A).

11. A computer-implemented method, for controlling an air outlet device, comprising:
- displaying, by a graphical user interface, in a display area (A) of a touch screen (T) comprised by said graphical user interface, at least one representation associated with at least one air outlet device;
- detecting, by said graphical user interface, a contact, maintained along a drag movement, made by a user on said representation, in a touch input region of the at least one touch screen (T);
- generating, by a control unit (C) operatively connected to said graphical user interface, control signals in response to the detection of said contact maintained along a drag movement; and
- providing said control signals, by said control unit (C), to at least one actuator of at least said air outlet device, to control the direction of an outgoing air flow therefrom;
wherein the method comprises:
- using said graphical user interface to:
- display on said display area (A) of the touch screen (T) at least two representations (F) associated respectively with the independent control of at least two air outlet devices; and
- independently detect each of at least two contacts maintained along respective drag movements, each including at least one contact on an area of a respective one of said at least two representations (F) or on an element visual (V) represented on or adjacent to the same, each visual element (V) being associated with a respective representation (F);
- using the control unit (C) to generate said control signals to independently control the direction of each of said at least two outgoing air flows, in response to the detection of each of said at least two contacts maintained along respective drag movements;
- using the graphical user interface to:
- display on said display area (A) of the touch screen (T) said at least two representations (F), which correspond to at least two outgoing air flows from said at least two air outlet devices;
- independently detect each of at least two contacts maintained along respective drag movements, each including at least one contact on an area of a respective one of said at least two representations (F) of the at least two outgoing air flows or on said visual element (V) depicted on or adjacent to the same; and
- independently modify each of said at least two representations (F) of the outgoing air flow, in response to the detection of the corresponding contact maintained along a drag movement;
and
- using the control unit (C) to generate said control signals to independently control the direction of each of said at least two outgoing air flows in at least two different directions, on mutually transverse planes, in response to the detection of each of said at least two contacts maintained along respective drag movements;
**characterized in that** the method further comprises using the graphical user interface to:
- define display sub-areas (A1, A2, A3, A4) within said display area (A), each of said display sub-areas (A1, A2, A3, A4) being dimensionally limited based on the maximum air direction ranges of the corresponding air outlet device, and to display within each of said display sub-areas (A1, A2, A3, A4) a respective one of the at least two representations (F) and visual element (V) represented on or adjacent to the same; and
- independently perform said modification of each of said at least two representations (F) of the outgoing air flow, displaying it, together with the visual element (V) represented on or adjacent to the same, only within the respective display sub-area (A1, A2, A3, A4) thereof.

12. A computer program, which comprises code instructions that when executed in at least one processor implement the steps of the method of claim 11.

## Patentansprüche

1. System zum Steuern einer Luftauslassvorrichtung, umfassend:
- eine Steuereinheit (C), die dazu konfiguriert ist, Steuersignale an mindestens eine Betätigungsvorrichtung mindestens einer Luftauslassvorrichtung bereitzustellen, um die Richtung eines daraus austretenden Luftstroms zu steuern; und
- eine grafische Benutzeroberfläche, die mindestens einen Touchscreen (T) umfasst, der mit der Steuereinheit (C) wirkverbunden ist und dazu konfiguriert ist:
- auf einem Anzeigebereich (A) des Touchscreens (T) mindestens eine Darstellung anzuzeigen, die der mindestens einen Luftauslassvorrichtung zugeordnet ist; und
- einen Kontakt, der entlang einer Schleppbewegung, die von einem Benutzer auf der Darstellung ausgeführt wird, aufrechterhalten wird, in einem Berührungseingabebereich des mindestens einen Touchscreens (T) zu erfassen;
wobei die Steuereinheit (C) dazu konfiguriert ist, die Steuersignale als Reaktion auf die Erfassung des Kontakts, der entlang einer Schleppbewegung aufrechterhalten wird, zu erzeugen;
- wobei die grafische Benutzeroberfläche dazu konfiguriert ist:
- auf dem Anzeigebereich (A) des Touchscreens (T) mindestens zwei Darstellungen (F) anzuzeigen, die jeweils der unabhängigen Steuerung von mindestens zwei Luftauslassvorrichtungen zugeordnet sind; und
- unabhängig jeden von mindestens zwei Kontakten, die entlang jeweiliger Schleppbewegungen aufrechterhalten werden, zu erfassen, wobei jeder mindestens einen Kontakt auf einem Bereich einer jeweiligen der mindestens zwei Darstellungen (F) oder auf einem auf oder angrenzend an diese dargestellten visuellen Element (V) einschließt, wobei jedes visuelle Element (V) einer jeweiligen Darstellung (F) der mindestens zwei Darstellungen (F) zugeordnet ist;
- die Steuereinheit (C) dazu konfiguriert ist, die Steuersignale zu erzeugen, um die Richtung jedes der mindestens zwei austretenden Luftströme unabhängig als Reaktion auf die Erfassung jedes der mindestens zwei Kontakte, die entlang jeweiliger Schleppbewegungen aufrechterhalten werden, zu steuern;
- die grafische Benutzeroberfläche dazu konfiguriert ist:
- auf dem Anzeigebereich (A) des Touchscreens (T) mindestens zwei Darstellungen (F), die den mindestens zwei austretenden Luftströmen aus den mindestens zwei Luftauslassvorrichtungen entsprechen, anzuzeigen;
- unabhängig voneinander jeden von mindestens zwei Kontakten, die entlang jeweiliger Schleppbewegungen aufrechterhalten werden, zu erfassen, wobei jeder mindestens einen Kontakt auf einem Bereich einer jeweiligen der mindestens zwei Darstellungen (F) der mindestens zwei austretenden Luftströme oder auf dem visuellen Element (V), das darauf oder daran angrenzend abgebildet ist, einschließt; und
- unabhängig jede der mindestens zwei Darstellungen (F) des austretenden Luftstroms als Reaktion auf die Erfassung des entsprechenden Kontakts, der entlang einer Schleppbewegung aufrechterhalten wird, zu ändern;
und
- die Steuereinheit (C) dazu konfiguriert ist, die Steuersignale zu erzeugen, um die Richtung jedes der mindestens zwei austretenden Luftströme in mindestens zwei unterschiedlichen Richtungen auf zueinander quer verlaufenden Ebenen als Reaktion auf die Erfassung jedes der mindestens zwei Kontakte, die entlang jeweiliger Schleppbewegungen aufrechterhalten werden, unabhängig zu steuern;
**dadurch gekennzeichnet, dass** die grafische Benutzeroberfläche dazu konfiguriert ist:
- Anzeigeteilbereiche (A1, A2, A3, A4) innerhalb des Anzeigebereichs (A) zu definieren, wobei jeder der Anzeigeteilbereiche (A1, A2, A3, A4) auf der Grundlage der maximalen Luftrichtungsbereiche der entsprechenden Luftauslassvorrichtung maßlich begrenzt ist, und innerhalb jedes der Anzeigeteilbereiche (A1, A2, A3, A4) jeweils eine der mindestens zwei Darstellungen (F) und ein darauf oder dazu angrenzend dargestelltes visuelles Element (V) anzuzeigen; und
- die Änderung jeder der mindestens zwei Darstellungen (F) des austretenden Luftstroms unabhängig durchzuführen und diese zusammen mit dem visuellen Element (V), das darauf abgebildet ist oder an dieses angrenzt, nur innerhalb des jeweiligen Anzeigeteilbereichs (A1, A2, A3, A4) davon anzuzeigen.

2. System nach Anspruch 1, wobei die grafische Benutzeroberfläche dazu konfiguriert ist, auf dem Anzeigebereich (A) des Touchscreens (T) eine Darstellung (D) jeder der mindestens zwei Luftauslassvorrichtungen anzuzeigen und jede der Darstellungen (F) des austretenden Luftstroms anzuzeigen, indem sie sie mit visuellen Eigenschaften definiert, die es ermöglichen, sie von dem Rest der Elemente, die in dem Anzeigebereich (A) dargestellt sind, mittels einer jeweiligen Form zu unterscheiden, die verlängert/verkürzt werden kann, die, wenn sie eine längliche Form annimmt, ein erstes Ende aufweist, das sich in oder angrenzend an die Darstellung (D) der entsprechenden Luftauslassvorrichtung befindet, und ein zweites Ende, das sich in dem Bereich der Darstellung (F) des entsprechenden austretenden Luftstroms befindet, wobei die längliche Form gemäß der gewünschten Richtung für den austretenden Luftstrom verläuft.

3. System nach Anspruch 2, wobei die grafische Benutzeroberfläche dazu konfiguriert ist, in dem Anzeigebereich (A) des Touchscreens (T) jedes visuelle Element (V) auf dem oder angrenzend an das zweite Ende der Darstellung (F) des jeweiligen austretenden Luftstroms anzuzeigen.

4. System nach Anspruch 2 oder 3, wobei die Steuereinheit (C) dazu konfiguriert ist, die Steuersignale zum Steuern der Richtung des austretenden Luftstroms basierend auf der Lage eines Teils der länglichen Form in dem Anzeigebereich (A) des Touchscreens (T), der weder das erste Ende noch das jeweilige visuelle Element (V) einschließt, in Bezug auf die Position der jeweiligen Luftauslassvorrichtung zu erzeugen.

5. System nach Anspruch 3, wobei:
- der Anzeigebereich des Touchscreens (T) in vordefinierte Zellen unterteilt ist, von denen jede einer jeweiligen vorgegebenen Richtung des jeweiligen austretenden Luftstroms zugeordnet ist; und
- die Steuereinheit (C) dazu konfiguriert ist, die Steuersignale zu erzeugen, um die Richtung des jeweiligen austretenden Luftstroms basierend auf der Position eines Teils der länglichen Form in einer der vordefinierten Zellen zu steuern, die weder das erste Ende noch das jeweilige visuelle Element (V) einschließt.

6. System nach Anspruch 4 oder 5, wobei die Steuereinheit (C) dazu konfiguriert ist, die Steuersignale zum Steuern der Richtung des austretenden Luftstroms basierend auf der Lage des Abschnitts der länglichen Form, der nicht das erste Ende oder das jeweilige visuelle Element (V) einschließt, zu erzeugen, sobald der entlang einer Schleppbewegung aufrechterhaltene Kontakt aufgehört hat.

7. System nach einem der vorstehenden Ansprüche, wobei:
- jede der Darstellungen (F) des austretenden Luftstroms, die durch die grafische Benutzeroberfläche angezeigt und geändert wird, Informationen über die Richtung und Intensität oder Strömungsrate des aus der jeweiligen Luftauslassvorrichtung austretenden Luftstroms darstellt; und
- die Steuereinheit (C) dazu konfiguriert ist, die Steuersignale zu erzeugen, um auch die Intensität oder Strömungsrate des jeweiligen austretenden Luftstroms als Reaktion auf die Erfassung jedes der mindestens zwei Kontakte, die entlang der jeweiligen Schleppbewegungen aufrechterhalten werden, zu steuern.

8. System nach Anspruch 7, sofern dieser von Anspruch 2 abhängt, wobei die Länge der länglichen Form anteilsmäßig zu der gewünschten Intensität oder Strömungsrate des entsprechenden austretenden Luftstroms ist, wobei die Steuereinheit (C) dazu konfiguriert ist, die Steuersignale zu erzeugen und dem mindestens einen Betätigungsvorrichtung der jeweiligen Luftauslassvorrichtung bereitzustellen, um diese derart zu steuern, dass sie die Intensität oder Strömungsrate des austretenden Luftstroms basierend auf der Länge der länglichen Form erhöht oder verringert.

9. System nach Anspruch 8, wobei die Steuereinheit (C) dazu konfiguriert ist, die Steuersignale zu erzeugen und mindestens einer Betätigungsvorrichtung der jeweiligen Luftauslassvorrichtung bereitzustellen, um diesen derart zu steuern, dass er den Auslass des austretenden Luftstroms basierend auf der Länge der länglichen Form und/oder der Position der Darstellung (F) des jeweiligen austretenden Luftstroms bzw. des darauf oder angrenzend dargestellten visuellen Elements (V) in dem Anzeigebereich (A) zulässt oder verhindert.

10. System nach Anspruch 9, wobei die Steuereinheit (C) dazu konfiguriert ist, Steuersignale zu erzeugen und der mindestens einen Betätigungsvorrichtung der jeweiligen Luftauslassvorrichtung bereitzustellen, um diesen derart zu steuern, dass er den Auslass des austretenden Luftstroms vollständig verhindert, wenn das visuelle Element (V) mit einem zentralen Bereich der Darstellung (D) der jeweiligen Luftauslassvorrichtung in dem Anzeigebereich (A) übereinstimmt.

11. Computerimplementiertes Verfahren zum Steuern einer Luftauslassvorrichtung, umfassend:
- Anzeigen, durch eine grafische Benutzeroberfläche in einem Anzeigebereich (A) eines Touchscreens (T), den die grafische Benutzeroberfläche umfasst, mindestens einer Darstellung, die der mindestens einen Luftauslassvorrichtung zugeordnet ist;
- Erfassen, durch die grafische Benutzeroberfläche eines Kontakts, der entlang einer von einem Benutzer auf der Darstellung ausgeführten Schleppbewegung in einem Berührungseingabebereich des mindestens einen Touchscreens (T) aufrechterhalten wird;
- Erzeugen von Steuersignalen durch eine Steuereinheit (C), die mit der grafischen Benutzeroberfläche wirkverbunden ist, als Reaktion auf die Erfassung des Kontakts, der entlang einer Schleppbewegung aufrechterhalten wird; und
- Bereitstellen der Steuersignale durch die Steuereinheit (C) an mindestens eine Betätigungsvorrichtung mindestens der Luftauslassvorrichtung, um die Richtung eines daraus austretenden Luftstroms zu steuern;
wobei das Verfahren umfasst:
- Verwenden der grafischen Benutzeroberfläche, um:
- auf dem Anzeigebereich (A) des Touchscreens (T) mindestens zwei Darstellungen (F) anzuzeigen, die jeweils der unabhängigen Steuerung von mindestens zwei Luftauslassvorrichtungen zugeordnet sind; und
- unabhängig jeden von mindestens zwei Kontakten, die entlang jeweiliger Schleppbewegungen aufrechterhalten werden, zu erfassen, wobei jeder mindestens einen Kontakt auf einem Bereich einer jeweiligen der mindestens zwei Darstellungen (F) oder auf einem auf oder angrenzend an diese dargestellten visuellen Element (V) einschließt, wobei jedes visuelle Element (V) einer jeweiligen Darstellung (F) zugeordnet ist;
- Verwenden der Steuereinheit (C) zum Erzeugen der Steuersignale, um die Richtung jedes der mindestens zwei austretenden Luftströme unabhängig als Reaktion auf die Erfassung jedes der mindestens zwei Kontakte, die entlang jeweiliger Widerstandsbewegungen aufrechterhalten werden, zu steuern;
- Verwenden der grafischen Benutzeroberfläche, um:
- auf dem Anzeigebereich (A) des Touchscreens (T) mindestens zwei Darstellungen (F), die den mindestens zwei austretenden Luftströmen aus den mindestens zwei Luftauslassvorrichtungen entsprechen, anzuzeigen;
- unabhängig voneinander jeden von mindestens zwei Kontakten, die entlang jeweiliger Schleppbewegungen aufrechterhalten werden, zu erfassen, wobei jeder mindestens einen Kontakt auf einem Bereich einer jeweiligen der mindestens zwei Darstellungen (F) der mindestens zwei austretenden Luftströme oder auf dem visuellen Element (V), das darauf oder daran angrenzend abgebildet ist, einschließt; und
- unabhängig jede der mindestens zwei Darstellungen (F) des austretenden Luftstroms als Reaktion auf die Erfassung des entsprechenden Kontakts, der entlang einer Schleppbewegung aufrechterhalten wird, zu ändern;
und
- Verwenden der Steuereinheit (C) zum Erzeugen der Steuersignale, um die Richtung jedes der mindestens zwei austretenden Luftströme in mindestens zwei unterschiedlichen Richtungen auf zueinander quer verlaufenden Ebenen als Reaktion auf die Erfassung jedes der mindestens zwei Kontakte, die entlang jeweiliger Schleppbewegungen aufrechterhalten werden, unabhängig zu steuern;
**dadurch gekennzeichnet, dass** das Verfahren weiter die Verwendung der grafischen Benutzeroberfläche umfasst, um:
- Anzeigeteilbereiche (A1, A2, A3, A4) innerhalb des Anzeigebereichs (A) zu definieren, wobei jeder der Anzeigeteilbereiche (A1, A2, A3, A4) auf der Grundlage der maximalen Luftrichtungsbereiche der entsprechenden Luftauslassvorrichtung maßlich begrenzt ist, und innerhalb jedes der Anzeigeteilbereiche (A1, A2, A3, A4) jeweils eine der mindestens zwei Darstellungen (F) und ein darauf oder dazu angrenzend dargestelltes visuelles Element (V) anzuzeigen; und
- die Änderung jeder der mindestens zwei Darstellungen (F) des austretenden Luftstroms unabhängig durchzuführen und diese zusammen mit dem visuellen Element (V), das darauf abgebildet ist oder an dieses angrenzt, nur innerhalb des jeweiligen Anzeigeteilbereichs (A1, A2, A3, A4) davon anzuzeigen.

12. Computerprogramm, das Codeanweisungen umfasst, die, wenn sie in mindestens einem Prozessor ausgeführt werden, die Schritte des Verfahrens nach Anspruch 11 implementieren.

## Revendications

1. Système de commande d'un dispositif de sortie d'air, comprenant :
- une unité de commande (C) configurée pour fournir des signaux de commande à au moins un actionneur d'au moins un dispositif de sortie d'air pour commander la direction d'un flux d'air sortant de celui-ci ; et
- une interface utilisateur graphique comprenant au moins un écran tactile (T) connecté de manière fonctionnelle à ladite unité de commande (C), et qui est configurée pour :
- afficher, sur une zone d'affichage (A) de l'écran tactile (T), au moins une représentation associée audit au moins un dispositif de sortie d'air ; et
- détecter un contact, maintenu le long d'un mouvement de glissement, effectué par un utilisateur sur ladite représentation, dans une zone d'entrée tactile du au moins un écran tactile (T) ;
dans lequel l'unité de commande (C) est configurée pour générer lesdits signaux de commande à la suite de la détection dudit contact maintenu le long d'un mouvement de glissement ;
- dans lequel l'interface utilisateur graphique est configurée pour :
- afficher, sur ladite zone d'affichage (A) de l'écran tactile (T), au moins deux représentations (F) associées respectivement à la commande indépendante d'au moins deux dispositifs de sortie d'air ; et
- détecter indépendamment chacun d'au moins deux contacts maintenus le long de mouvements de glissement respectifs, chacun incluant au moins un contact sur une zone d'une représentation respective desdites au moins deux représentations (F) ou sur un élément visuel (V) représenté sur celle-ci ou adjacent à celle-ci, chaque élément visuel (V) étant associé à une représentation respective (F) desdites au moins deux représentations (F) ;
- l'unité de commande (C) est configurée pour générer lesdits signaux de commande pour commander indépendamment la direction de chacun desdits au moins deux flux d'air sortants, à la suite de la détection de chacun desdits au moins deux contacts maintenus le long de mouvements de glissement respectifs ;
- l'interface utilisateur graphique est configurée pour :
- afficher, sur ladite zone d'affichage (A) de l'écran tactile (T), lesdites au moins deux représentations (F), qui correspondent à au moins deux flux d'air sortants desdits au moins deux dispositifs de sortie d'air ;
- détecter indépendamment chacun d'au moins deux contacts maintenus le long de mouvements de glissement respectifs, chacun incluant au moins un contact sur une zone d'une représentation respective desdites au moins deux représentations (F) des au moins deux flux d'air sortants ou sur ledit élément visuel (V) représenté sur celle-ci ou adjacent à celle-ci ; et
- modifier indépendamment chacune desdites au moins deux représentations (F) du flux d'air sortant, à la suite de la détection du contact correspondant maintenu le long d'un mouvement de glissement ;
et
- l'unité de commande (C) est configurée pour générer lesdits signaux de commande pour commander indépendamment la direction de chacun desdits au moins deux flux d'air sortants dans au moins deux directions différentes, sur des plans mutuellement transversaux, à la suite de la détection de chacun desdits au moins deux contacts maintenus le long de mouvements de glissement respectifs ;
**caractérisé en ce que** l'interface utilisateur graphique est configurée pour :
- définir des sous-zones d'affichage (A1, A2, A3, A4) dans ladite zone d'affichage (A), chacune desdites sous-zones d'affichage (A1, A2, A3, A4) étant limitée dimensionnellement sur la base des plages de direction d'air maximales du dispositif de sortie d'air correspondant, et afficher, dans chacune desdites sous-zones d'affichage (A1, A2, A3, A4), une des au moins deux représentations (F) et un élément visuel (V) représenté sur celle-ci ou adjacent à celle-ci ; et
- effectuer indépendamment ladite modification de chacune desdites au moins deux représentations (F) du flux d'air sortant, en l'affichant, conjointement avec l'élément visuel (V) représenté sur celle-ci ou adjacent à celle-ci, uniquement dans la sous-zone d'affichage respective (A1, A2, A3, A4) de celle-ci.

2. Système selon la revendication 1, dans lequel l'interface utilisateur graphique est configurée pour afficher, sur ladite zone d'affichage (A) de l'écran tactile (T), une représentation (D) de chacun des au moins deux dispositifs de sortie d'air, et pour afficher chacune desdites représentations (F) du flux d'air sortant, en la définissant avec des propriétés visuelles qui permettent de la différencier du reste des éléments représentés dans la zone d'affichage (A), au moyen d'une forme respective qui peut être allongée/raccourcie, qui, lorsqu'elle adopte une forme allongée, présente une première extrémité située dans la représentation (D), ou adjacente à celle-ci, du dispositif de sortie d'air correspondant et une seconde extrémité située dans ladite zone de la représentation (F) du flux d'air sortant correspondant, dans lequel ladite forme allongée s'étend selon la direction souhaitée pour le flux d'air sortant.

3. Système selon la revendication 2, dans lequel l'interface utilisateur graphique est configurée pour afficher, dans ladite zone d'affichage (A) de l'écran tactile (T), chaque élément visuel (V) sur la seconde extrémité, ou adjacent à celle-ci, de la représentation (F) du flux d'air sortant respectif.

4. Système selon la revendication 2 ou 3, dans lequel l'unité de commande (C) est configurée pour générer lesdits signaux de commande pour commander la direction du flux d'air sortant sur la base de l'emplacement, dans la zone d'affichage (A) de l'écran tactile (T), d'une partie de ladite forme allongée qui n'inclut pas ladite première extrémité ou l'élément visuel respectif (V), par rapport à la position du dispositif de sortie d'air respectif.

5. Système selon la revendication 3, dans lequel :
- ladite zone d'affichage de l'écran tactile (T) est divisée en cellules prédéfinies, chacune étant affectée à une direction prédéterminée respective du flux d'air sortant respectif ; et
- l'unité de commande (C) est configurée pour générer lesdits signaux de commande pour commander la direction du flux d'air sortant respectif sur la base de l'emplacement, dans l'une desdites cellules prédéfinies, d'une partie de ladite forme allongée qui n'inclut pas ladite première extrémité ou l'élément visuel respectif (V).

6. Système selon la revendication 4 ou 5, dans lequel l'unité de commande (C) est configurée pour générer les signaux de commande pour commander la direction du flux d'air sortant sur la base de l'emplacement de ladite partie de la forme allongée qui n'inclut pas ladite première extrémité ou l'élément visuel respectif (V), une fois que le contact maintenu le long d'un mouvement de glissement a cessé.

7. Système selon l'une quelconque des revendications précédentes, dans lequel :
- chacune desdites représentations (F) du flux d'air sortant, affichées et modifiées par l'interface utilisateur graphique, représente des informations sur la direction et l'intensité ou le débit du flux d'air sortant du dispositif de sortie d'air respectif ; et
- l'unité de commande (C) est configurée pour générer lesdits signaux de commande pour commander également l'intensité ou le débit du flux d'air sortant respectif, à la suite de la détection de chacun desdits au moins deux contacts maintenus le long de mouvements de glissement respectifs.

8. Système selon la revendication 7 lorsqu'elle dépend de la revendication 2, dans lequel la longueur de ladite forme allongée est proportionnelle à l'intensité souhaitée ou au débit souhaité pour le flux d'air sortant correspondant, l'unité de commande (C) étant configurée pour générer et fournir lesdits signaux de commande à le au moins un actionneur du dispositif de sortie d'air respectif, pour le commander de telle sorte qu'il augmente ou diminue l'intensité ou le débit du flux d'air sortant sur la base de ladite longueur de la forme allongée.

9. Système selon la revendication 8, dans lequel l'unité de commande (C) est configurée pour générer et fournir lesdits signaux de commande à au moins un actionneur du dispositif de sortie d'air respectif, pour le commander de telle sorte qu'il permette ou empêche la sortie du flux d'air sortant sur la base de la longueur de la forme allongée et/ou de la position, dans la zone d'affichage (A), de ladite zone de la représentation (F) du flux d'air sortant respectif ou dudit élément visuel (V) représenté sur celle-ci ou adjacent à celle-ci.

10. Système selon la revendication 9, dans lequel l'unité de commande (C) est configurée pour générer et fournir les signaux de commande à le au moins un actionneur du dispositif de sortie d'air respectif, pour le commander de telle sorte qu'il empêche complètement la sortie du flux d'air sortant lorsque ledit élément visuel (V) coïncide avec une zone centrale de la représentation (D) du dispositif de sortie d'air respectif, dans la zone d'affichage (A).

11. Procédé mis en oeuvre par ordinateur pour commander un dispositif de sortie d'air, comprenant :
- l'affichage, par une interface utilisateur graphique, dans une zone d'affichage (A) d'un écran tactile (T) compris par ladite interface utilisateur graphique, d'au moins une représentation associée à au moins un dispositif de sortie d'air ;
- la détection, par ladite interface utilisateur graphique, d'un contact, maintenu le long d'un mouvement de glissement, effectué par un utilisateur sur ladite représentation, dans une zone d'entrée tactile du au moins un écran tactile (T) ;
- la génération, par une unité de commande (C) connectée de manière fonctionnelle à ladite interface utilisateur graphique, de signaux de commande à la suite de la détection dudit contact maintenu le long d'un mouvement de glissement ; et
- la fourniture desdits signaux de commande, par ladite unité de commande (C), à au moins un actionneur d'au moins ledit dispositif de sortie d'air, pour commander la direction d'un flux d'air sortant de celui-ci ;
dans lequel le procédé comprend :
- l'utilisation de ladite interface utilisateur graphique pour :
- afficher, sur ladite zone d'affichage (A) de l'écran tactile (T), au moins deux représentations (F) associées respectivement à la commande indépendante d'au moins deux dispositifs de sortie d'air ; et
- détecter indépendamment chacun d'au moins deux contacts maintenus le long de mouvements de glissement respectifs, chacun incluant au moins un contact sur une zone d'une représentation respective desdites au moins deux représentations (F) ou sur un élément visuel (V) représenté sur celle-ci ou adjacent à celle-ci, chaque élément visuel (V) étant associé à une représentation respective (F) ;
- utiliser l'unité de commande (C) pour générer lesdits signaux de commande pour commander indépendamment la direction de chacun desdits au moins deux flux d'air sortants, à la suite de la détection de chacun desdits au moins deux contacts maintenus le long de mouvements de glissement respectifs ;
- utiliser l'interface utilisateur graphique pour :
- afficher, sur ladite zone d'affichage (A) de l'écran tactile (T), lesdites au moins deux représentations (F), qui correspondent à au moins deux flux d'air sortants desdits au moins deux dispositifs de sortie d'air ;
- détecter indépendamment chacun d'au moins deux contacts maintenus le long de mouvements de glissement respectifs, chacun incluant au moins un contact sur une zone d'une représentation respective desdites au moins deux représentations (F) des au moins deux flux d'air sortants ou sur ledit élément visuel (V) représenté sur celle-ci ou adjacent à celle-ci ; et
- modifier indépendamment chacune desdites au moins deux représentations (F) du flux d'air sortant, à la suite de la détection du contact correspondant maintenu le long d'un mouvement de glissement ;
et
- utiliser l'unité de commande (C) pour générer lesdits signaux de commande pour commander indépendamment la direction de chacun desdits au moins deux flux d'air sortants dans au moins deux directions différentes, sur des plans mutuellement transversaux, à la suite de la détection de chacun desdits au moins deux contacts maintenus le long de mouvements de glissement respectifs ;
**caractérisé en ce que** le procédé comprend en outre l'utilisation de l'interface utilisateur graphique pour :
- définir des sous-zones d'affichage (A1, A2, A3, A4) dans ladite zone d'affichage (A), chacune desdites sous-zones d'affichage (A1, A2, A3, A4) étant limitée dimensionnellement sur la base des plages de direction d'air maximales du dispositif de sortie d'air correspondant, et afficher, dans chacune desdites sous-zones d'affichage (A1, A2, A3, A4), une des au moins deux représentations (F) et un élément visuel (V) représenté sur celle-ci ou adjacent à celle-ci ; et
- effectuer indépendamment ladite modification de chacune desdites au moins deux représentations (F) du flux d'air sortant, en l'affichant, conjointement avec l'élément visuel (V) représenté sur celle-ci ou adjacent à celle-ci, uniquement dans la sous-zone d'affichage respective (A1, A2, A3, A4) de celle-ci.

12. Programme informatique, qui comprend des instructions de code qui, lorsqu'elles sont exécutées dans au moins un processeur, mettent en oeuvre les étapes du procédé selon la revendication 11.
